# EUROPEAN PATENT APPLICATION

(11) **EP 1 211 493 A1**
(43) Date of publication of application: **05.06.2002**
(21) Application number: 01128738.0
(22) Date of filing: 03.12.2001
(51) Int. Cl.: G01L 3/10, G01L 5/22, B62D 15/02

(54) **Torque sensor**

(30) Priority: 04.12.2000 JP 2000368240
(71) Applicant: TOYODA KOKI KABUSHIKI KAISHA, Kariya-shi Aichi-ken (JP)
(72) Inventor: Nakano, Jiro, Kariya-shi, Aichi-ken (JP); Shibata, Yoshiyuki, Kariya-shi, Aichi-ken (JP); Arashima, Hiroaki, Kariya-shi, Aichi-ken (JP)
(74) Representative: Leson, Thomas Johannes Alois, Dipl.-Ing.

(57) **Abstract**

A torque sensor includes a torsion bar (90), a first shaft (91) connected to one end of the torsion bar, a second shaft (92) connected to the other end of the torsion bar, first through third magnetic bodies, and two coils. The first magnetic body (2) is fixed to the first shaft (91) and has an annular shape so as to surround the torsion bar. The first magnetic body (2) is composed of two magnetically separated magnetic portions (3,5) and has a first projection (3a,5a) on an outer circumference thereof. The second magnetic body (6) is fixed to the second shaft and has an annular shape so as to surround the first magnetic body (2). The second magnetic body (6) has on an inner circumference thereof a second projection (7a,11a) which radially faces the first projection (3a,5a). The coils (14,17) are disposed at respective axial positions corresponding to the magnetic portions of the first magnetic body (2) and surround the second magnetic body (6). The third magnetic body is composed of two magnetically separated magnetic portions (12,15), each being disposed to surround the corresponding coil and forming, in cooperation with the first and second magnetic bodies (2,6), a closed magnetic circuit around the corresponding coil. The first and second projections are configured and arranged in such a manner that when a facing area through which the first and second projections face each other varies due to torsion of the torsion bar, inductances of the coils change in accordance with the variation in the facing area.

## Description

### INCORPORATION BY REFERENCE

The present application claims priority under 35 U.S.C. §119 to Japanese Patent Application No. 2000-368240, filed on December 4, 2000. The contents of that application are incorporated herein by reference in its entirety.

### BACKGROUND OF THE INVENTION

### Field of the Invention:

The present invention relates to a torque sensor usable in, for example, a motor-driven power steering apparatus.

### Description of the Related Art:

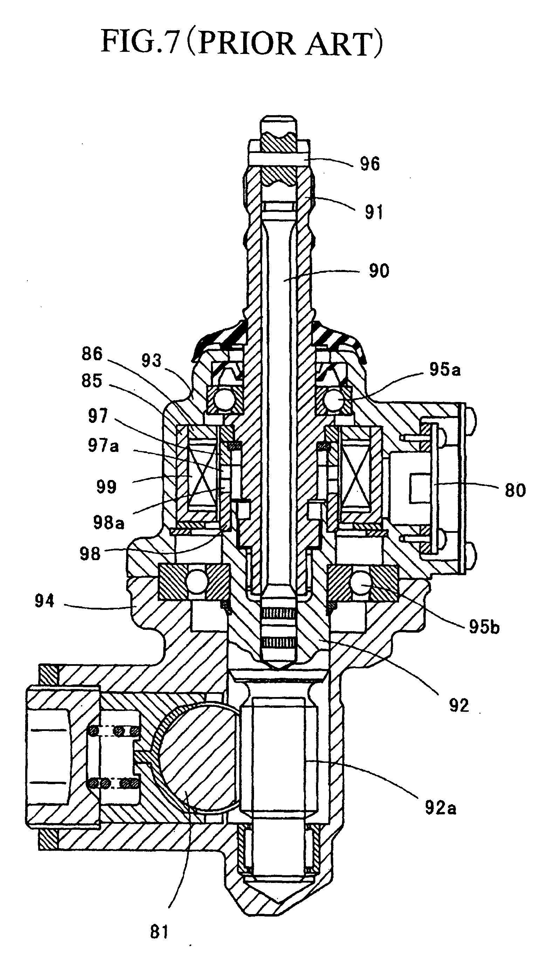

Japanese Patent Application Laid-Open (*kokai*) No. 2000-146722 discloses a conventional torque sensor as shown in FIG. 7. In the torque sensor, a torsion bar 90 extends axially; and a hollow input shaft 91 serving as a first shaft is disposed coaxially with the torsion bar 90 and connected to an upper end of the torsion bar 90 via a pin 96. An unillustrated steering wheel of a vehicle is connected to an upper portion of the input shaft 91.

A hollow output shaft 92 serving as a second shaft is disposed coaxially with the torsion bar 90 and the input shaft 91, and connected to a lower end of the torsion bar 90 by means of spline-engagement and press-fitting; and a pinion 92a is formed on a lower portion of the output shaft 92.

An upper housing 93 and a lower housing 94 are provided so as to surround the input shaft 91 and the output shaft 92, respectively, and to support the same via bearings 95a and 95b, respectively. A rack 81 is supported by the lower housing 94 and is in meshing-engagement with the pinion 92a of the output shaft 92. An unillustrated motor for assisting driver's steering operation is operatively coupled with the rack 81.

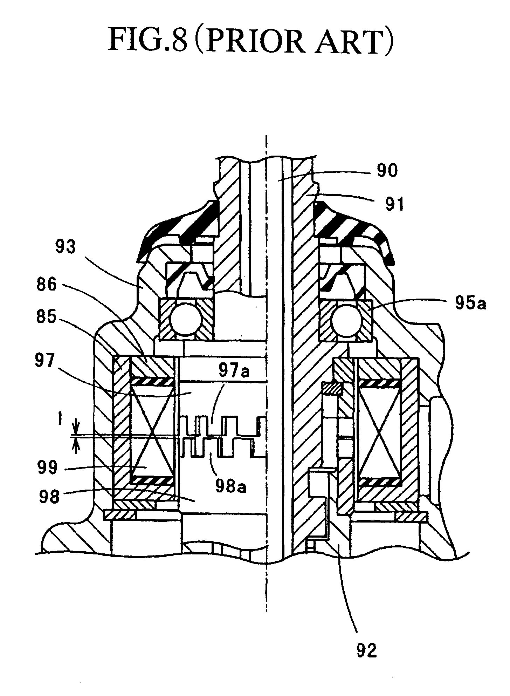

A first sensor ring 97 made of a magnetic material and serving as a first magnetic body is disposed within the upper housing 93 and fixed to the input shaft 91. As shown in FIG. 8, the first sensor ring 97 assumes an annular shape in order to surround the torsion bar 90 circumferentially; and a large number of rectangular teeth 97a serving as a first protrusion are formed on a lower end surface of the first sensor ring 97.

As shown in FIG 7, a second sensor ring 98 made of a magnetic material and serving as a second magnetic body is disposed within the upper housing 93 and fixed to the output shaft 92. As shown in FIG 8, the second sensor ring 98 assumes an annular shape in order to surround the torsion bar 90 circumferentially; and a large number of rectangular teeth 98a serving as a second protrusion are formed on an upper end surface of the second sensor ring 98. The teeth 98a face the teeth 97a with an axial clearance and a phase shift provided therebetween.

As shown in FIG 7, a coil 99 is fixedly disposed within the upper housing 93 so as to surround the first and second sensor rings 97 and 98, while facing their outer circumferences. Further, a guide 85 and a spacer 86 serving as a third magnetic body are fixedly disposed so as to surround the coil 99 and to form a magnetic circuit in cooperation with the first and second sensor rings 97 and 98. The coil 99 is connected to an interface circuit (hereinafter referred to as an "I/F circuit") 80, which is connected to an unillustrated microcomputer.

The above-described torque sensor operates as follows. When a torque is transmitted from the steering wheel to the input shaft 91 upon operation of the steering wheel, the torsion bar 90 is twisted with resultant generation of a relative displacement between the input shaft 91 and the output shaft 92. As a result, an area through which the teeth 97a of the first sensor ring 97 face the teeth 98a of the second sensor ring 98 changes, and thus, the inductance of the coil 99 changes. This change in inductance is input to the microcomputer via the I/F circuit 80. Therefore, in a motor-driven power steering apparatus which employs the above-described torque sensor, an assisting force proportional to the torque input to the input shaft 91 is imparted to the rack 81.

However, in the above-described conventional torque sensor, since the teeth 97a and 98a of the first and second sensor rings 97 and 98 face each other in the axial direction, only the single coil 99 is provided for torque detection. Therefore, when the reliability of a signal obtained from the coil 99 decreases, provision of assist force by the motor must be stopped, for reasons of safety. Therefore, stable steering of the vehicle cannot be attained.

The reliability of the torque sensor may be improved through formation of two or more magnetic circuits for provision of two or more torque detection coils. However, since the conventional torque sensor is configured such that the teeth 97a and 98a of the first and second sensor rings 97 and 98 face each other in the axial direction, formation of two or more magnetic circuits for provision of two or more torque detection coils results in a considerably complicated structure, thus making manufacture difficult.

Further, in the conventional torque sensor, since the teeth 97a and 98a of the first and second sensor rings 97 and 98 face each other in the axial direction, the size of the gap between the teeth 97a and 98a may vary as a result of assembly errors. Therefore, inductance varies greatly among manufactured torque sensors, resulting in variation in quality.

### SUMMARY OF THE INVENTION

In view of the foregoing, an object of the present invention is to provide a torque sensor which can secure stable steering operation and which can be manufactured at a consistent level of quality.

In order to solve the above-described problems in the related art, the present inventors have carried out earnest studies and have found that the problems can be solved through employment of an arrangement such that a first projection of a first magnetic body and a second projection of a second magnetic body radially face each other. The present invention has been completed on the basis of this finding.

The present invention provides a torque sensor comprising: a torsion bar extending along an axial direction; a first shaft disposed coaxially with the torsion bar and connected to one end of the torsion bar; a second shaft disposed coaxially with the torsion bar and the first shaft and connected to the other end of the torsion bar; a first magnetic body fixed to the first shaft and having an annular shape so as to surround the torsion bar, the first magnetic body being composed of at least two magnetically separated magnetic portions and having a first projection on an outer circumference thereof; a second magnetic body fixed to the second shaft and having an annular shape so as to surround the first magnetic body, the second magnetic body having on an inner circumference thereof a second projection which radially faces the first projection; at least two coils disposed at respective axial positions corresponding to the magnetic portions of the first magnetic body and surrounding the second magnetic body; and a third magnetic body composed of at least two magnetically separated magnetic portions, each being disposed to surround the corresponding coil and forming, in cooperation with the first and second magnetic bodies, a closed magnetic circuit around the corresponding coil, wherein the first and second projections are configured and arranged in such a manner that when a facing area through which the first and second projections face each other varies due to torsion of the torsion bar, inductances of the coils change in accordance with the variation in the facing area.

In the torque sensor according to the present invention, at least two closed magnetic circuits are formed, and a coil is provided for each of the magnetic circuits so as to detect torque individually. Therefore, even when the reliability of one magnetic circuit or coil decreases, torque can be detected by use of other coils. Thus, the torque sensor of the present invention can secure stable steering operation.

Further, since the first projection of the first magnetic body radially faces the second projection of the second magnetic body, assembly errors do not cause variance in the radial size of the clearance between the first and second projections. Therefore, inductance does not vary among manufactured torque sensors, and variation in quality hardly occurs.

Therefore, the torque sensor of the present invention can secure stable steering operation, and can be manufactured with consistent quality.

In the torque sensor of the present invention, the first through third magnetic bodies may have the following structure. The first magnetic body is composed of at least two tubular magnetic portions fixed to the first shaft while being magnetically separated from the first shaft, and at least one nonmagnetic portion integrally disposed between the two tubular magnetic portions. The second magnetic body is composed of at least three tubular magnetic portions and at least two nonmagnetic portions, each being integrally disposed between the corresponding tubular magnetic portions. Two adjacent magnetic portions of the second magnetic body radially face the corresponding one of the magnetic portions of the first magnetic body. The third magnetic body is composed of at least two magnetic portions and at least one nonmagnetic portion integrally disposed between the magnetic portions. Each magnetic portion of the third magnetic body radially faces two corresponding adjacent magnetic portions of the second magnetic body.

In this case, each of the first and third magnetic bodies may have two magnetic portions which sandwich a single nonmagnetic portion, and the second magnetic body may have three magnetic portions sandwiching two nonmagnetic portions.

In the torque sensor of the present invention, alternatively, the first through third magnetic bodies may have the following structure. The first magnetic body is composed of two tubular magnetic portions fixed to the first shaft without being magnetically separated from the first shaft, and a nonmagnetic portion integrally disposed between the two tubular magnetic portions. The second magnetic body is composed of two tubular magnetic portions and a nonmagnetic portion integrally disposed between the tubular magnetic portions. Each magnetic portion of the second magnetic body radially faces the corresponding one of the magnetic portions of the first magnetic body. The third magnetic body is composed of at least two magnetic portions and a nonmagnetic portion integrally disposed between the magnetic portions. Each magnetic portion of the third magnetic body radially faces the corresponding one of the magnetic portions of the second magnetic body.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
FIG. 1 is a longitudinal cross section of a torque sensor according to a first embodiment of the present invention;
FIG. 2 is an enlarged longitudinal cross section of the torque sensor according to the first embodiment;
FIG. 3 is a cross section taken along line III - III of FIG. 1;
FIG. 4 is a cross section taken along line IV - IV of FIG. 1;
FIG. 5 is a block diagram of an I/F circuit used in the torque sensor according to the first embodiment;
FIG. 6 is a longitudinal cross section of a torque sensor according to a second embodiment of the present invention;
FIG. 7 is a longitudinal cross section of a conventional torque sensor; and
FIG 8 is an enlarged longitudinal cross section of the conventional torque sensor.

### DESCRIPTION OF THE PREFERRED EMBODIMENTS

Embodiments of the present will now be described with reference to the drawings.

### First Embodiment:

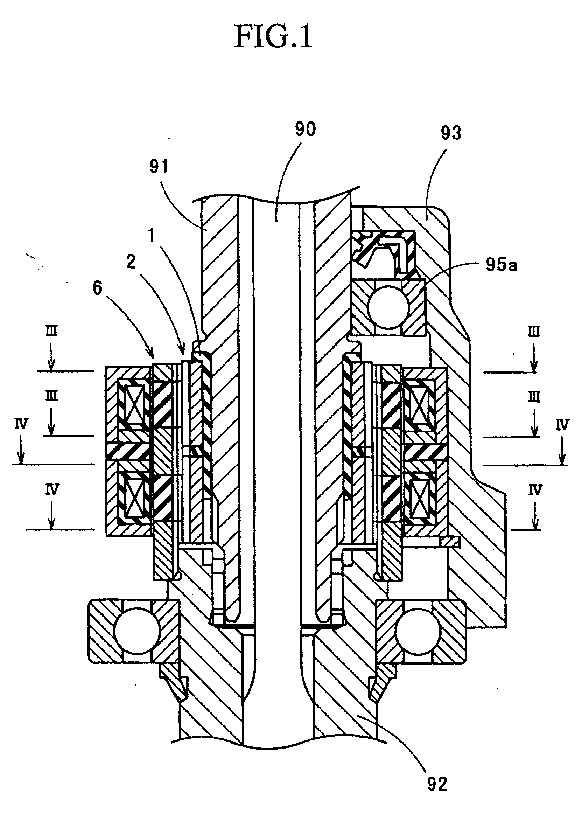

As shown in FIG. 1, the main mechanical structure of a torque sensor according to a first embodiment is identical with that of the conventional torque sensor shown in FIG. 7. Therefore, structural elements identical with those of the conventional torque sensor shown in FIG. 7 are denoted by the same reference numerals, and their repeated descriptions are omitted.

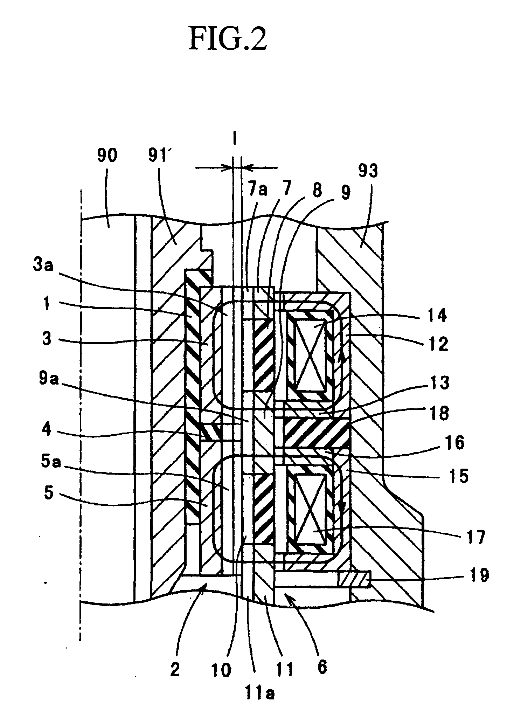

As shown in FIGS. 1 and 2, in the torque sensor according to the present embodiment, a ring 1 made of a nonmagnetic material is disposed within the upper housing 93 and fixed to the input shaft 91, which serves as a first shaft; and a first sensor ring 2 serving as a first magnetic body is fitted onto an outer circumferential surface of the ring 1. Therefore, the first sensor ring 2 is magnetically separated from the input shaft 91. The first sensor ring 2 is composed of a first tubular magnetic portion 3 made of a magnetic material, a first tubular nonmagnetic portion 4 made of a nonmagnetic material, and a second tubular magnetic portion 5 made of a magnetic material, which are arranged in this sequence from the side of the input shaft 91.

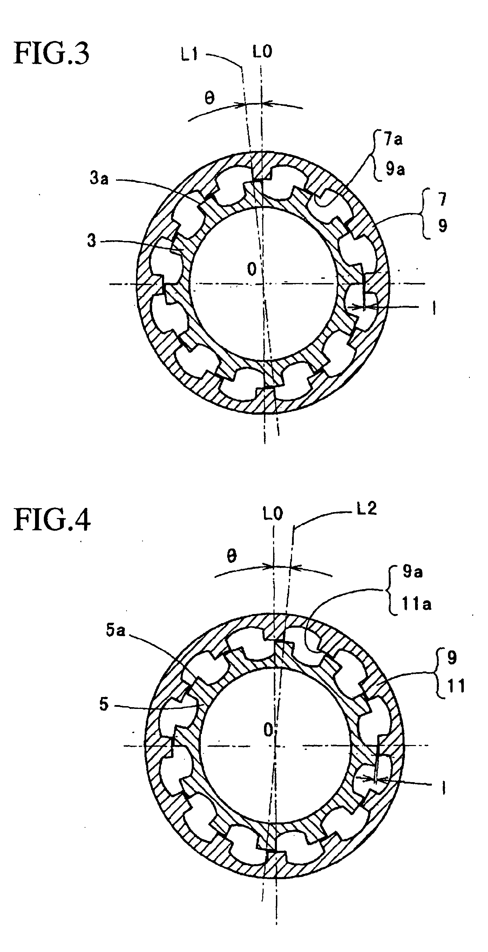

As shown in FIGS. 3 and 4, the first and second magnetic portions 3 and 5 of the first sensor ring 2 each assume an annular shape so as to surround the torsion bar 90. A large number of rectangular teeth 3a are formed on outer circumferential surface of the first magnetic portion 3 at predetermined intervals in the circumferential direction, and a large number of rectangular teeth 5a are formed on the outer circumferential surface of the second magnetic portion 5 at predetermined intervals in the circumferential direction. The teeth 3a serve as a first projection, as do the teeth 5a.

Further, as shown in FIGS. 1 and 2, in the upper housing 93, a second sensor ring 6 serving as a second magnetic body is fitted onto an upper portion of the output shaft 92, which serves as a second shaft. The second sensor ring 6 is composed of a third tubular magnetic portion 7 made of a magnetic material, a third tubular nonmagnetic portion 8 made of a nonmagnetic material, a fourth tubular magnetic portion 9 made of a magnetic material, a fourth tubular nonmagnetic portion 10 made of a nonmagnetic material, and a fifth tubular magnetic portion 11 made of a magnetic material, which are arranged in this sequence from the side of the input shaft 91.

As shown in FIGS. 3 and 4, the third, fourth, and fifth magnetic portions 7, 9, and 11 of the second sensor ring 6 each assume an annular shape so as to surround the first sensor ring 2. A large number of rectangular teeth 7a, 9a, and 11a are formed on respective inner circumferential surfaces of the third, fourth, and fifth magnetic portions 7, 9, and 11 at predetermined intervals in the circumferential direction. The teeth 7a, 9a, and 11a serve as a second projection.

The teeth 3a and 5a of the first and second magnetic portions 3 and 5 and the teeth 7a, 9a, and 11a of the third, fourth, and fifth magnetic portions 7, 9, and 11 share a common center O. The teeth 3a and 5a of the first and second magnetic portions 3 and 5 face the teeth 7a, 9a, and 11a of the third, fourth, and fifth magnetic portions 7, 9, and 11 with a radial clearance of dimension 1.

In the neutral condition, a center line L0 of each tooth 7a (9a, 11 a) passing through the center O and a center line L1 of each tooth 3a passing through the center O form an angle θ therebetween; and the center line L0 of each tooth 7a (9a, 11a) passing through the center O and a center line L2 of each tooth 5a passing through the center O form an angle θ therebetween in the direction opposite the direction in which the center lines L0 and L1 form the angle θ.

As shown in FIGS. I and 2, two guides 12 and 15 and two spacers 13 and 16 made of a magnetic material and serving as a third magnetic body are provided within the upper housing 93. The pair including the guide 12 and the spacer 13 and the pair including the guide 15 and the spacer 16 are separated from each other by means of a separator 18 made of a nonmagnetic material, and are fixed by means of a circlip 19. Each of the guides 12 and 15, the spacers 13 and 16, and the separator 18 assumes an annular shape so as to surround the second sensor ring 6.

The first magnetic portion 3, the third magnetic portion 7, the guide 12, the spacer 13, and the fourth magnetic portion 9 form a closed magnetic circuit. The second magnetic portion 5, the fifth magnetic portion 11, the guide 15, the spacer 16, and the fourth magnetic portion 9 form another closed magnetic circuit. Coils 14 and 17 are disposed within the respective magnetic circuits.

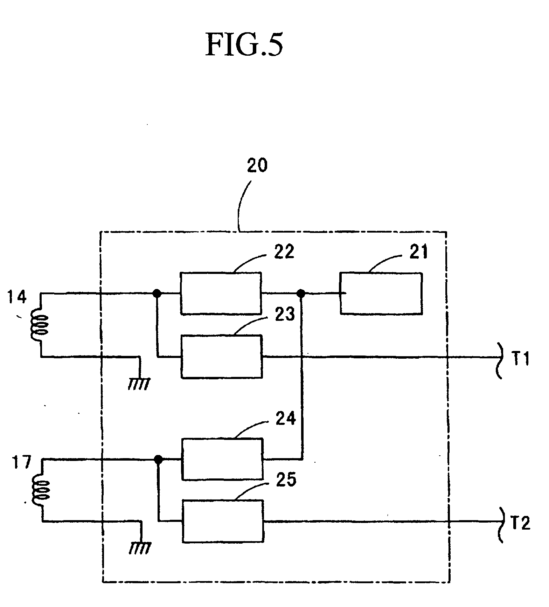

As shown in FIG 5, the coils 14 and 17 are connected to an I/F circuit 20, which includes a base oscillation circuit 21; a first oscillation circuit 22 connected between the base oscillation circuit 21 and the coil 14; a second oscillation circuit 24 connected between the base oscillation circuit 21 and the coil 17; a torque detection-processing circuit 23 connected to the coil 14; and a torque detection-processing circuit 25 connected to the coil 17.

The torque sensor of the present embodiment having the above-described structure is manufactured in the following manner.

The second sensor ring 6 can be manufactured through a process of bonding, by use of adhesive, the third magnetic portion 7, the third nonmagnetic portion 8, the fourth magnetic portion 9, the fourth nonmagnetic portion 10, and the fifth magnetic portion 11. Alternatively, the second sensor ring 6 can be manufactured through a process of placing the third magnetic portion 7, the fourth magnetic portion 9, and the fifth magnetic portion 11 in a cavity of a mold for injection molding and then injecting a nonmagnetic resin into the cavity to thereby integrally form the third nonmagnetic portion 8 and the fourth nonmagnetic portion 10. Alternatively, the second sensor ring 6 can be manufactured through a process of alternately placing, in a cavity of a mold, magnetic powder for forming the third magnetic portion 7, the fourth magnetic portion 9, and the fifth magnetic portion 11 and a nonmagnetic powder for forming the third nonmagnetic portion 8 and the fourth nonmagnetic portion 10, forming them into a green body, and sintering the green body. The first sensor ring 2 can be manufactured through a similar process.

The torque sensor is assembled by use of the above-described first and second sensor rings 2 and 6. First, the second ring 6 is press-fitted to the output shaft 92. Subsequently, the torsion bar 90 is fixed to the output shaft 92.

Meanwhile, after press-fitting of the ring 1 onto the input shaft 91, the first sensor ring 2 is fitted onto the first ring 1. Subsequently, after the upper housing 93 is fitted onto the input shaft 91 via the bearing 95a, the guide 12 and the spacer 13, after having been assembled with the coil 14 inserted into the guide 12, are inserted into the upper housing 93. Subsequently, after insertion of the separator 18, the guide 15 and the spacer 16, after having been assembled with the coil 17 inserted into the guide 15, are inserted into the upper housing 93. Subsequently, the guide 15 is fixed to the upper housing 93 by means of the circlip 19.

Subsequently, the upper housing 93 is mounted on the lower housing 94 in such a manner that the torsion bar 90 is axially inserted into the input shaft 91. Subsequently, the input shaft 91 is connected to the torsion bar 90 by means of a pin as in the case of the conventional torque sensor shown in FIG 7. Thus, the torque sensor according to the first embodiment is completed.

As shown in FIG. 5, an oscillation signal output from the base oscillation circuit 21 of the I/F circuit 20 is supplied to the first and second oscillation circuits 22 and 24, whereby properly synchronized signals are supplied from the first and second oscillation circuits 22 and 24 to the coils 14 and 17 of the torque sensor. Consequently, as shown in FIG. 2, two magnetic paths are formed, through which magnetic fluxes flow in opposite directions as indicated by arrows. The above-described torque sensor operates as follows. When a torque is input to the input shaft 91 upon operation of the steering wheel, the torsion bar 90 is twisted with a resultant generation of relative displacement between the input shaft 91 and the output shaft 92. As a result, an area through which the teeth 3a and 5a of the first and second magnetic portions 3 and 5 face the teeth 7a, 9a, and 11a of the third, fourth, and fifth magnetic portions 7, 9, and 11 changes, and thus, the densities of magnetic fluxes flowing through the magnetic paths change, so that the inductance of the coil 14 and that of the coil 17 change. The torque detection-processing circuits 23 and 25 detect the inductances of the coils 14 and 17 and output corresponding torque signals T1 and T2, which are then input to an unillustrated microcomputer.

In the torque sensor, since variations in inductances of the coils 14 and 17 are detected individually, even when one of detection signals output from the coils 14 and 17 becomes unreliable, input torque can be determined on the basis of other detection signal. Therefore, even in such a case, the steering assist provided by the motor can be continued.

Further, since the teeth 3a and 5a of the first and second magnetic portions 3 and 5 radially face the teeth 7a, 9a, and 11a of the first, fourth, and fifth magnetic portions 7, 9, and 11, assembly errors do not cause variance in the radial dimension 1 of the clearance between the teeth 3a and 5a, and the teeth 7a, 9a, and 11a. Therefore, inductance does not vary among manufactured torque sensors, and variation in quality hardly occurs.

Therefore, the torque sensor of the first embodiment can secure stable steering operation, and can be manufactured with consistent quality.

Further, variation in magnetic characteristics due to, for example, temperature can be compensated for on the basis of the difference between the detection signals output from the coils 14 and 17.

Moreover, the positional relation between the teeth 3a and 5a with respect to the teeth 7a, 9a, 11a enables doubling sensor sensitivity through employment of an inductance bridge circuit. That is, the center line L0 of each tooth 7a (9a, 11a) and the center line L1 of a corresponding tooth 3a form an angle θ in the direction opposite the direction in which an angle θ is formed by the center line L0 of each tooth 7a (9a, 11a) and the center line L2 of a corresponding tooth 5a. Therefore, when a relative displacement is produced between the input shaft 91 and the output shaft 92 with a resultant increase in the facing area between the teeth 7a and 9a, and the teeth 3a, the facing area between the teeth 9a and 11a and the teeth 5a decreases. By contrast, when the facing area between the teeth 7a and 9a, and the teeth 3a decreases, the facing area between the teeth 9a and 11 a and the teeth 5a increases. Thus, the inductance of the coil 14 and the inductance of the coil 17 change in opposite directions, thereby doubling the sensitivity of the sensor.

### Second Embodiment:

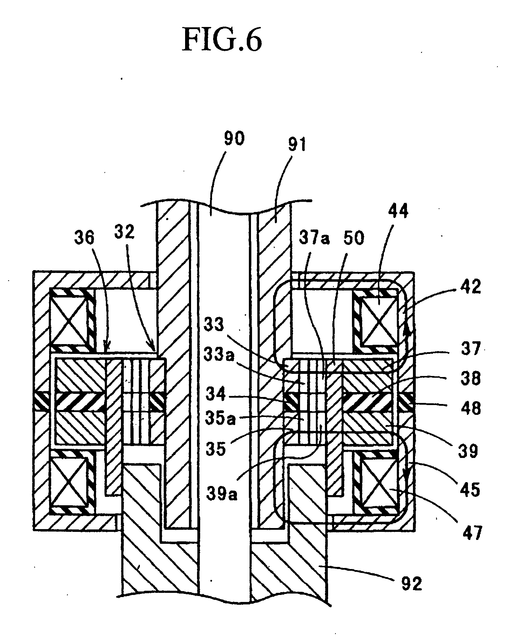

As shown in FIG. 6, the main mechanical structure of a torque sensor according to a second embodiment is identical with that of the conventional torque sensor shown in FIG. 7. Therefore, structural elements identical with those of the conventional torque sensor shown in FIG 7 are denoted by the same reference numerals, and their repeated descriptions are omitted.

As shown in FIG. 6, in the torque sensor according to the present embodiment, a first sensor ring 32 serving as a first magnetic body is press-fitted onto the input shaft 91. Therefore, the first sensor ring 32 is not magnetically separated from the input shaft 91. The first sensor ring 32 is composed of a first tubular magnetic portion 33 made of a magnetic material, a first tubular nonmagnetic portion 34 made of a nonmagnetic material, and a second tubular magnetic portion 35 made of a magnetic material, which are arranged in this sequence from the input shaft 91 side. A large number of rectangular teeth 33a and 35a are formed on outer circumferential surfaces of the first and second magnetic portions 33 and 35, respectively. The teeth 33a serve as a first projection, as do the teeth 35a.

A holder 50 made of a magnetic material is press fitted on the output shaft 92; and a second sensor ring 36 formed of a magnetic material and serving as a second magnetic body is press-fitted onto an upper portion of the holder 50. The second sensor ring 36 is composed of a third tubular magnetic portion 37 made of a magnetic material, a third tubular nonmagnetic portion 38 made of a nonmagnetic material, and a fourth tubular magnetic portion 39 made of a magnetic material, which are arranged in this sequence from the input shaft 91 side. A large number of rectangular teeth 37a and 39a are formed on inner circumferential surfaces of the third and fourth magnetic portions 37 and 39, respectively. The teeth 37a and 39a serve as a second projection. The teeth 33a and 35a of the first and second magnetic portions 33 and 35 and the teeth 37a and 39a of the third and fourth magnetic portions 37 and 39 have the same angular relationship therebetween as in the first embodiment.

Two guides 42 and 45 made of a magnetic material are disposed while being separated from each other by means of a separator 48. Coils 44 and 47 are provided within the guides 42 and 45, respectively. The guides 42 and 45 and the separator 48 each assume an annular shape so as to surround the torsion bar 90 and cover an outer circumferential surface of the second sensor ring 36.

The first magnetic portion 33, the third magnetic portion 37, the guide 42, and the input shaft 91 form a closed magnetic circuit. The second magnetic portion 35, the fourth magnetic portion 39, the guide 45, the output shaft 92, and the input shaft 91 form another closed magnetic circuit. The remaining structure is the same as in the first embodiment.

In the torque sensor of the second embodiment as well, as shown in FIG. 6, two magnetic paths are formed. The torque sensor of the second embodiment provides the same operation and effects as those of the torque sensor of the first embodiment.

In the torque sensor of the first embodiment, the first sensor ring 2 serving as a first magnetic body is composed of two magnetic portions 3 and 5 and one nonmagnetic portion 4; the second sensor ring 6 serving as a second magnetic body is composed of three magnetic portions 7, 9, and 11 and two nonmagnetic portions 8 and 10; two guides 12 and 15 and two spacers 13 and 16 are provided as a third magnetic body; a single separator 18 is provided as a nonmagnetic portion; and two coils 14 and 17 are provided. In the torque sensor of the second embodiment, the first sensor ring 32 serving as a first magnetic body is composed of two magnetic portions 33 and 35 and one nonmagnetic portion 34; the second sensor ring 36 serving as a second magnetic body is composed of two magnetic portions 37 and 39 and one nonmagnetic portion 38; two guides 42 and 45 are provided as a third magnetic body; a single separator 48 is provided as a nonmagnetic portion; and two coils 44 and 47 are provided. However, the above-described embodiments are mere examples, and the present invention can be practiced while being modified in various manners without departing from the scope thereof.

A torque sensor includes a torsion bar, a first shaft connected to one end of the torsion bar, a second shaft connected to the other end of the torsion bar, first through third magnetic bodies, and two coils. The first magnetic body is fixed to the first shaft and has an annular shape so as to surround the torsion bar. The first magnetic body is composed of two magnetically separated magnetic portions and has a first projection on an outer circumference thereof. The second magnetic body is fixed to the second shaft and has an annular shape so as to surround the first magnetic body. The second magnetic body has on an inner circumference thereof a second projection which radially faces the first projection. The coils are disposed at respective axial positions corresponding to the magnetic portions of the first magnetic body and surround the second magnetic body. The third magnetic body is composed of two magnetically separated magnetic portions, each being disposed to surround the corresponding coil and forming, in cooperation with the first and second magnetic bodies, a closed magnetic circuit around the corresponding coil. The first and second projections are configured and arranged in such a manner that when a facing area through which the first and second projections face each other varies due to torsion of the torsion bar, inductances of the coils change in accordance with the variation in the facing area.

## Claims

1. A torque sensor comprising:
a torsion bar extending along an axial direction;
a first shaft disposed coaxially with the torsion bar and connected to one end of the torsion bar;
a second shaft disposed coaxially with the torsion bar and the first shaft and connected to the other end of the torsion bar;
a first magnetic body fixed to the first shaft and having an annular shape so as to surround the torsion bar, the first magnetic body being composed of at least two magnetically separated magnetic portions and having a first projection on an outer circumference thereof;
a second magnetic body fixed to the second shaft and having an annular shape so as to surround the first magnetic body, the second magnetic body having on an inner circumference thereof a second projection which radially faces the first projection;
at least two coils disposed at respective axial positions corresponding to the magnetic portions of the first magnetic body and surrounding the second magnetic body; and
a third magnetic body composed of at least two magnetically separated magnetic portions, each being disposed to surround the corresponding coil and forming, in cooperation with the first and second magnetic bodies, a closed magnetic circuit around the corresponding coil, wherein
the first and second projections are configured and arranged in such a manner that when a facing area through which the first and second projections face each other varies due to torsion of the torsion bar, inductances of the coils change in accordance with the variation in the facing area.

2. A torque sensor according to claim 1, wherein
the first magnetic body is composed of at least two tubular magnetic portions fixed to the first shaft while being magnetically separated from the first shaft, and at least one nonmagnetic portion integrally disposed between the two tubular magnetic portions;
the second magnetic body is composed of at least three tubular magnetic portions and at least two nonmagnetic portions, each being integrally disposed between the corresponding tubular magnetic portions, two adjacent magnetic portions of the second magnetic body radially facing the corresponding one of the magnetic portions of the first magnetic body; and
the third magnetic body is composed of at least two magnetic portions and at least one nonmagnetic portion integrally disposed between the magnetic portions, each magnetic portion of the third magnetic body radially facing two corresponding adjacent magnetic portions of the second magnetic body.

3. A torque sensor according to claim 2, wherein each of the first and third magnetic bodies has two magnetic portions which sandwich a single nonmagnetic portion, and the second magnetic body has three magnetic portions sandwiching two nonmagnetic portions.

4. A torque sensor according to claim 3, wherein each of the first and second projections includes a plurality of rectangular tooth-shaped projections which are arranged at constant intervals in a circumferential direction.

5. A torque sensor according to claim 1, wherein
the first magnetic body is composed of two tubular magnetic portions fixed to the first shaft without being magnetically separated from the first shaft, and a nonmagnetic portion integrally disposed between the two tubular magnetic portions;
the second magnetic body is composed of two tubular magnetic portions and a nonmagnetic portion integrally disposed between the tubular magnetic portions, each magnetic portion of the second magnetic body radially facing the corresponding one of the magnetic portions of the first magnetic body; and
the third magnetic body is composed of at least two magnetic portions and a nonmagnetic portion integrally disposed between the magnetic portions, each magnetic portion of the third magnetic body radially facing the corresponding one of the magnetic portions of the second magnetic body.

6. A torque sensor according to claim 5, wherein each of the first and second projections includes a plurality of rectangular tooth-shaped projections which are arranged at constant intervals in a circumferential direction.
